# EUROPEAN PATENT SPECIFICATION

(11) **EP 4 365 715 B1**
(45) Date of publication and mention of the grant of the patent: **25.02.2026**
(21) Application number: 21958413.3
(22) Date of filing: 24.09.2021
(51) Int. Cl.: G06F 3/0338, G05G 5/05, G05G 9/047

(54) **DIRECTIONAL INPUT DEVICE AND CONTROLLER**
RICHTUNGSEINGABEVORRICHTUNG UND STEUERUNG
DISPOSITIF D'ENTRÉE DIRECTIONNEL ET DISPOSITIF DE COMMANDE

(43) Date of publication of application: 08.05.2024
(73) Proprietor: Nintendo Co., Ltd., Kyoto-shi, Kyoto 601-8501 (JP)
(72) Inventor: FURUIKE, Hironori, Kyoto-shi, Kyoto 601-8501 (JP); KORIYAMA, Kazuhiko, Kyoto-shi, Kyoto 601-8501 (JP)
(74) Representative: Lorenz Seidler Gossel Part. mbB
(86) International application number: PCT/JP2021/035099
(87) International publication number: WO 2023/047537

(56) References cited:
- JP-A- 2003 223 276
- JP-A- 2016 071 627
- JP-A- 2021 051 908
- JP-A- 2021 051 908
- US-A- 4 408 103

## Description

### TECHNICAL FIELD

The present disclosure relates to a direction input device and a controller.

### BACKGROUND ART

Japanese Patent Laying-Open No. 2021-51908 (PTL 1) discloses a multi-direction input device.

### CITATION LIST

### PATENT LITERATURE

PTL 1: Japanese Patent Laying-Open No. 2021-51908

### SUMMARY OF INVENTION

### TECHNICAL PROBLEM

The multi-direction input device described in PTL 1 includes an upper arm, a lower arm, a first spring portion, and a second spring portion. The first spring portion biases the upper arm downward. The second spring portion biases the lower arm downward. Wobbling of the upper arm and the lower arm is thus suppressed. The multi-direction input device, however, is disadvantageous in large number of components.

### SOLUTION TO PROBLEM

A direction input device according to the present disclosure includes an input portion, a base, a first slide portion, a second slide portion, a first slid surface, and a second slid surface. The input portion is tiltable. The input portion includes an upper component, a lower component, and a biasing portion. The upper component is provided, at top, with an operated surface to be operated by a user. The upper component is operated to be tilted. The lower component is provided below the upper component and tilted together with the upper component. The biasing portion is provided between the upper component and the lower component and biases the upper component and the lower component in a direction in which the upper component and the lower component are distant from each other in an upward-downward direction. The input portion is pressed against the base from above. The base is shaped such that biasing force applied by the biasing portion to the lower component acts to move the input portion back to an initial position when the input portion is tilted from the initial position. The first slide portion slides in a first direction with tilting of the input portion from the initial position in the first direction. The first slide portion is provided with a first hole through which the input portion passes, the first hole extending in a second direction perpendicular to the first direction. The second slide portion slides in the second direction with tilting of the input portion from the initial position in the second direction. The second slide portion is provided with a second hole through which the input portion passes above the first slide portion, the second hole extending in the first direction. The first slide portion slides over the first slid surface as being pressed against the first slid surface from below by the upper component biased upward by the biasing portion. The first slid surface is in a shape curved convexly upward. The second slide portion slides over the second slid surface as being pressed against the second slid surface from below by the upper component biased upward by the biasing portion. The second slid surface is in a shape curved convexly upward.

According to the direction input device according to the present disclosure, the first slide portion slides over the first slid surface and the second slide portion slides over the second slid surface as being pressed from below against the first slid surface and the second slid surface, respectively, by the upper component biased upward by the biasing portion. Thus, the first slide portion slides in a stable manner over the first slid surface and the second slide portion slides in a stable manner over the second slid surface, as being pressed by the common upper component. Therefore, wobbling can be suppressed while the number of components is reduced.

The direction input device according to the above may include a guide portion that guides slide of the first slide portion from below. Wobbling of the first slide portion downward can thus further be suppressed.

In the direction input device according to the above, the guide portion may include a guide surface over which the first slide portion slides. A center of curvature of the guide surface may coincide with a center of curvature of the first slid surface. Wobbling of the first slide portion can thus further be suppressed.

In the direction input device according to the above, the guide portion may function as a switch that is pressed down by the first slide portion. The guide portion can thus also perform a switch function, and hence the number of components can be reduced.

In the direction input device according to the above, the input portion may further include a shaft member. The shaft member may be constructed to press down the first slide portion without pressing down the second slide portion when the input portion is pressed down. Thus, only the first slide portion can selectively be pressed down. Therefore, restriction of a degree of freedom in design of the second slide portion can be suppressed.

In the direction input device according to the above, the base or the lower component may be in a shape that varies recovery force depending on a direction of tilt. A user can thus intuitively recognize a direction of tilt based on difference in recovery force.

In the direction input device according to the above, the base may include an upper curved surface opposed to the lower component. The second slid surface may be in a partially spherical shape formed such that the input portion is tilted with respect to a virtual center. The upper curved surface may be smaller in curvature than the second slid surface. Recovery force of the input portion that is produced with tilting of the input portion can thus be larger.

In the direction input device according to the above, the base may be provided with a hole. An inner peripheral side surface of the hole may surround an outer peripheral side surface of the lower component. The inner peripheral side surface may have an inner diameter decreasing downward. Recovery force of the input portion that is produced with tilting of the input portion can thus further be larger.

The direction input device according to the above may further include a module housing in which the first slide portion and the second slide portion are arranged. Each of the first slid surface and the second slid surface may be formed on a rear surface of the module housing. The first slid surface and the second slid surface can thus readily be equal in curvature to each other. Therefore, different feeling caused by the difference in direction of tilt of the input portion can be suppressed.

The direction input device according to the above may further include a module housing in which the first slide portion and the second slide portion are arranged. The second slid surface may be formed on a rear surface of the module housing and the first slid surface may be formed on a lower surface of the second slide portion. Thus, while the first slide portion biases the second slide portion upward, the second slide portion is pressed against the rear surface of the module housing. Therefore, wobbling of each of the first slide portion and the second slide portion can further be suppressed.

A controller according to the present disclosure may include the direction input device according to the above and a controller housing provided with the direction input device. The second slid surface may be in a partially spherical shape formed such that the input portion is tilted with respect to a virtual center. The virtual center may be located on the outside of the controller housing. A radius of rotation of the input portion can be made larger with respect to the shape of the controller. Consequently, operability of the controller can be improved.

A controller according to the present disclosure may include the direction input device according to the above and a controller housing provided with the direction input device. The second slid surface may be in a partially spherical shape formed such that the input portion is tilted with respect to a virtual center. The virtual center may be located on the outside of the direction input device and in the inside of the controller housing. Thus, while a radius of rotation of the input portion is large regardless of the size of the direction input device, the virtual center is located in the inside of the controller. Therefore, awkwardness at the time of the operation onto the input portion can be suppressed.

In the controller according to the above, each of the first slid surface and the second slid surface may be formed on a rear surface of the controller housing. The first slid surface and the second slid surface can thus readily be equal in curvature to each other. Therefore, different feeling caused by the difference in direction of tilt of the input portion can be suppressed.

In the controller according to the above, the second slid surface may be formed on a rear surface of the controller housing and the first slid surface may be formed on a lower surface of the second slide portion. Thus, while the first slide portion biases the second slide portion upward, the second slide portion is pressed against the rear surface of the module housing. Therefore, wobbling of each of the first slide portion and the second slide portion can further be suppressed.

### ADVANTAGEOUS EFFECTS OF INVENTION

According to the present disclosure, wobbling can be suppressed while the number of components is reduced.

### BRIEF DESCRIPTION OF DRAWINGS

Fig. 1 is a first schematic perspective view showing a construction of a direction input device according to a first embodiment.
Fig. 2 is a first schematic cross-sectional view of the direction input device according to the first embodiment.
Fig. 3 is a second schematic cross-sectional view of the direction input device according to the first embodiment.
Fig. 4 is a second schematic perspective view showing the construction of the direction input device according to the first embodiment.
Fig. 5 is a schematic perspective view showing a construction of a lower component of the direction input device according to the first embodiment.
Fig. 6 is a third schematic cross-sectional view of the direction input device according to the first embodiment.
Fig. 7 is a fourth schematic cross-sectional view of the direction input device according to the first embodiment.
Fig. 8 is a schematic cross-sectional view illustrating a motion of a first slide portion of the direction input device according to the first embodiment.
Fig. 9 is a schematic perspective view showing a construction of the direction input device according to a second embodiment.
Fig. 10 is a schematic perspective view showing a construction of the lower component of the direction input device according to a third embodiment.
Fig. 11 is a schematic cross-sectional view showing a construction of the direction input device according to a fourth embodiment.
Fig. 12 is a schematic cross-sectional view illustrating a motion of a second slide portion of the direction input device according to the fourth embodiment.
Fig. 13 is a schematic cross-sectional view showing a construction of the direction input device according to a fifth embodiment.
Fig. 14 is a schematic cross-sectional view illustrating a motion of the second slide portion of the direction input device according to the fifth embodiment.
Fig. 15 is a schematic cross-sectional view showing a construction of the direction input device according to a sixth embodiment.
Fig. 16 is a schematic cross-sectional view of the direction input device according to a seventh embodiment.
Fig. 17 is a first schematic cross-sectional view of the direction input device according to an eighth embodiment.
Fig. 18 is a second schematic cross-sectional view of the direction input device according to the eighth embodiment.
Fig. 19 is a schematic perspective view showing a first step in a method of assembling the direction input device according to the eighth embodiment.
Fig. 20 is a schematic perspective view showing a second step in the method of assembling the direction input device according to the eighth embodiment.
Fig. 21 is a schematic perspective view showing a third step in the method of assembling the direction input device according to the eighth embodiment.
Fig. 22 is a schematic perspective view of the direction input device according to a ninth embodiment.
Fig. 23 is a schematic perspective view showing a first step in a method of assembling the direction input device according to the ninth embodiment.
Fig. 24 is a schematic perspective view showing a second step in the method of assembling the direction input device according to the ninth embodiment.
Fig. 25 is a schematic plan view showing a construction of a controller according to the present disclosure.
Fig. 26 is a schematic cross-sectional view along the line XXVI-XXVI in Fig. 25.

### DESCRIPTION OF EMBODIMENTS

An embodiment of the present disclosure will be described in detail with reference to the drawings. The same or corresponding elements in the drawings have the same reference characters allotted and description thereof will not be repeated.

### [A. Direction Input Device]

### (First Embodiment)

An overview of a construction of a direction input device 100 according to a first embodiment will initially be described.

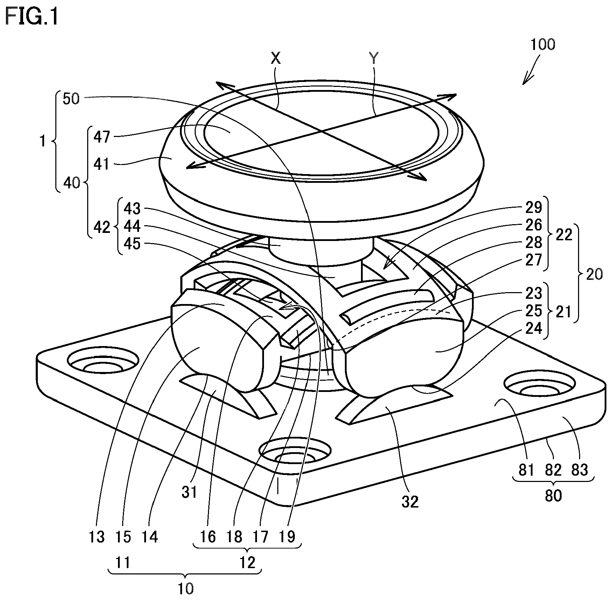

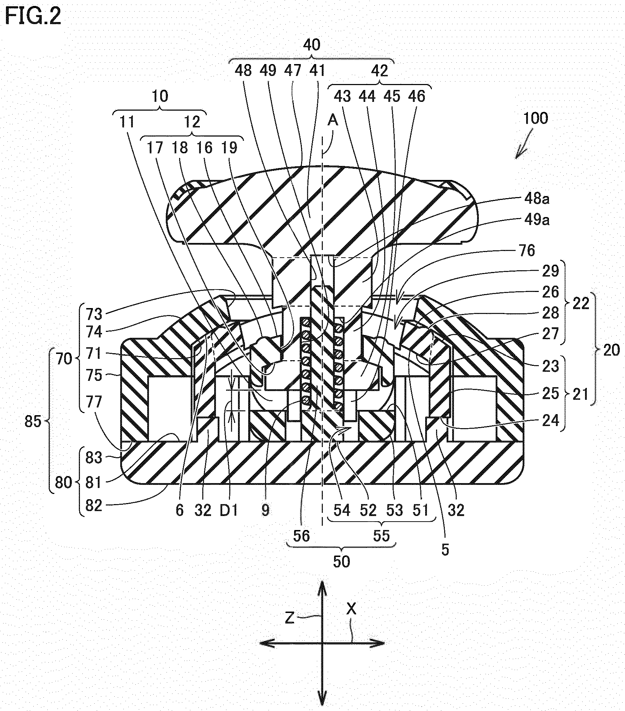

Fig. 1 is a first schematic perspective view showing the construction of direction input device 100 according to the first embodiment. As shown in Fig. 1, direction input device 100 according to the first embodiment mainly includes an input portion 1, a base 80, a first slide portion 10, a second slide portion 20, a first guide portion 31, and a second guide portion 32. Input portion 1 is, for example, a stick. Input portion 1 is tiltable. Input portion 1 includes an upper component 40, a lower component 50, and a biasing portion 9 (see Fig. 2). Upper component 40 is provided with an operated surface 47 at the top. Operated surface 47 is a surface to be operated by a user. Upper component 40 is operated to be titled. Lower component 50 is provided below upper component 40.

A direction from lower component 50 toward upper component 40 is herein defined as an upward direction. In contrast, a direction from upper component 40 toward lower component 50 is defined as a downward direction. A direction in parallel to the direction from lower component 50 toward upper component 40 is defined as an upward-downward direction Z (see Fig. 2). A first direction X is defined as a direction perpendicular to upward-downward direction Z. First direction X is, for example, a pitch direction. A second direction Y is defined as a direction perpendicular to each of first direction X and upward-downward direction Z. Second direction Y is, for example, a roll direction.

First slide portion 10 is provided with a first hole 19 that extends in second direction Y. First hole 19 is a through hole. Input portion 1 passes through first hole 19. First slide portion 10 slides in first direction X with tilting of input portion 1 from an initial position in first direction X. First slide portion 10 includes a first main body portion 12 and a first support portion 11. In second direction Y, first support portion 11 is located on each of opposing sides of first main body portion 12. First main body portion 12 lies between first support portions 11. First support portion 11 is provided on first guide portion 31.

First hole 19 is provided in first main body portion 12. First main body portion 12 includes a first main body upper surface 16 and a first main body lower surface 17. First main body lower surface 17 is located opposite to first main body upper surface 16. First hole 19 opens in each of first main body upper surface 16 and first main body lower surface 17. First main body portion 12 may be provided with a first projection 18. First projection 18 extends along second direction Y. In first direction X, first projection 18 may be provided on each of opposing sides of first hole 19.

First support portion 11 includes a first support upper surface 13, a first support lower surface 14, and a first support side surface 15. First support upper surface 13 may be distant from first main body upper surface 16. First support lower surface 14 is located opposite to first support upper surface 13. First support side surface 15 is contiguous to each of first support upper surface 13 and first support lower surface 14.

Second slide portion 20 is provided with a second hole 29 that extends in first direction X. First direction X is perpendicular to second direction Y. Second hole 29 is a through hole. Second hole 29 is located above first hole 19. Input portion 1 passes through second hole 29 above first slide portion 10. Second slide portion 20 slides in second direction Y with tilting of input portion 1 from the initial position in second direction Y. Second slide portion 20 includes a second main body portion 22 and a second support portion 21. In first direction X, second support portion 21 is located on each of opposing sides of second main body portion 22. Second main body portion 22 lies between second support portions 21. Second support portion 21 is provided on second guide portion 32.

Second hole 29 is provided in second main body portion 22. Second main body portion 22 includes a second main body upper surface 26 and a second main body lower surface 27. Second main body lower surface 27 is located opposite to second main body upper surface 26. Second hole 29 opens in each of second main body upper surface 26 and second main body lower surface 27. Second main body portion 22 may be provided with a second projection 28. Second projection 28 extends along second direction Y. In first direction X, second projection 28 is provided on each of opposing sides of second hole 29.

Second support portion 21 includes a second support upper surface 23, a second support lower surface 24, and a second support side surface 25. Second support upper surface 23 may be contiguous to second main body upper surface 26. Second support lower surface 24 is located opposite to second support upper surface 23. Second support side surface 25 is contiguous to each of second support upper surface 23 and second support lower surface 24.

Base 80 includes a base upper surface 81, a base lower surface 82, and a base side surface 83. Base lower surface 82 is located opposite to base upper surface 81. Base side surface 83 is contiguous to each of base upper surface 81 and base lower surface 82. First guide portion 31 and second guide portion 32 are provided on base upper surface 81. First guide portion 31 and second guide portion 32 may be provided integrally as a part of base 80. Input portion 1 is pressed against base 80 from above. Input portion 1 is provided on base 80 so as to press base 80. Input portion 1 is in contact with base upper surface 81.

Fig. 2 is a first schematic cross-sectional view of direction input device 100 according to the first embodiment. The first schematic cross-sectional view is a view along first direction X. As shown in Fig. 2, direction input device 100 according to the first embodiment further includes an upper housing portion 70. Upper housing portion 70 and base 80 (lower housing portion) constitute a module housing 85. Upper component 40 includes an operated portion 41 and a shaft 42. Operated portion 41 forms operated surface 47. Shaft 42 is located below operated portion 41. Shaft 42 is contiguous to operated portion 41. Shaft 42 includes a first shaft member 43, a second shaft member 44, a pullout prevention portion 45, and a protruding portion 46.

First shaft member 43 is contiguous to operated portion 41. First shaft member 43 is located below operated portion 41. Second shaft member 44 is contiguous to first shaft member 43. Second shaft member 44 is located below first shaft member 43. Second shaft member 44 may be smaller in diameter than first shaft member 43. In the upward-downward direction, first shaft member 43 is located between second shaft member 44 and operated portion 41. Pullout prevention portion 45 is contiguous to second shaft member 44. Pullout prevention portion 45 is located below second shaft member 44. In the upward-downward direction, second shaft member 44 is located between pullout prevention portion 45 and first shaft member 43. Protruding portion 46 is contiguous to pullout prevention portion 45. Protruding portion 46 is located below pullout prevention portion 45. In the upward-downward direction, pullout prevention portion 45 is located between protruding portion 46 and second shaft member 44.

Upper housing portion 70 is provided with a shaft through hole 76. Shaft 42 penetrates shaft through hole 76. Upper housing portion 70 includes a first upper surface 74, a first rear surface 71, a first outer side surface 75, a first inner side surface 73, and a first lower surface 77. First upper surface 74 is located opposite to first rear surface 71. First inner side surface 73 is contiguous to each of first upper surface 74 and first rear surface 71. First inner side surface 73 defines shaft through hole 76. First lower surface 77 is contiguous to first outer side surface 75. In upward-downward direction Z, first outer side surface 75 is located between first upper surface 74 and first lower surface 77. First upper surface 74 includes a portion in a shape curved convexly upward.

A second slid surface 6 is formed on first rear surface 71 of upper housing portion 70. Second slide portion 20 is pressed against second slid surface 6 from below. Second slide portion 20 is biased upward by upper component 40 biased upward by biasing portion 9. Second slide portion 20 slides over second slid surface 6. Second projection 28 of second slide portion 20 abuts on second slid surface 6. Second slide portion 20 does not have to include second projection 28. In this case, second main body upper surface 26 of second main body portion 22 of second slide portion 20 may abut on second slid surface 6.

Second slid surface 6 extends in second direction Y. Second slid surface 6 is in a shape curved convexly upward. In a cross-section in parallel to each of second direction Y and upward-downward direction Z, second slid surface 6 may be in, for example, an arc shape or an elliptical arc shape. Second slid surface 6 may be in a partially spherical shape.

First slid surface 5 is formed on a lower surface of second slide portion 20. Specifically, first slid surface 5 is formed, for example, on second main body lower surface 27 of second main body portion 22. First slid surface 5 extends in first direction X. First slid surface 5 is in a shape curved convexly upward. In a cross-section in parallel to each of first direction X and upward-downward direction Z, first slid surface 5 may be in, for example, an arc shape or an elliptical arc shape. First slid surface 5 may be in a partially spherical shape.

First slide portion 10 is pressed against first slid surface 5 from below. First slid surface 5 is biased upward by upper component 40 biased upward by biasing portion 9. First slide portion 10 slides over first slid surface 5. First projection 18 (see Fig. 1) of first slide portion 10 abuts on first slid surface 5. First slide portion 10 does not have to include first projection 18. In this case, first main body upper surface 16 of first main body portion 12 may abut on first slid surface 5.

As shown in Fig. 2, a space is provided in the inside of module housing 85 by abutment of an outer portion of first lower surface 77 of upper housing portion 70 and an outer portion of base upper surface 81 of base 80 on each other. First slide portion 10, second slide portion 20, and a part of input portion 1 are arranged in the inside of module housing 85. Operated portion 41 of input portion 1 is arranged on the outside of module housing 85. Module housing 85 herein refers to a housing in which each of first slide portion 10 and second slide portion 20 is accommodated.

Upper component 40 is provided with a first insertion hole 49 and a second insertion hole 48. First insertion hole 49 opens in pullout prevention portion 45. First insertion hole 49 is provided, for example, in pullout prevention portion 45 and second shaft member 44. First insertion hole 49 includes a first bottom surface 49a. Second insertion hole 48 is contiguous to first insertion hole 49. Second insertion hole 48 is located above first insertion hole 49. Second insertion hole 48 is provided, for example, in first shaft member 43 and second shaft member 44. Each of first insertion hole 49 and second insertion hole 48 extends along an axial line A. When input portion 1 is located at the initial position, axial line A is in parallel to upward-downward direction Z. First insertion hole 49 may be larger in diameter than second insertion hole 48.

Lower component 50 includes a mount portion 55 and an insertion portion 56. Insertion portion 56 is contiguous to mount portion 55. Insertion portion 56 is located above mount portion 55. Insertion portion 56 is formed like a rod. Insertion portion 56 extends in upward-downward direction Z. Insertion portion 56 is inserted in first insertion hole 49 and second insertion hole 48. Insertion portion 56 penetrates first insertion hole 49 and reaches second insertion hole 48. Second insertion hole 48 includes a second bottom surface 48a. At least when input portion 1 is located at the initial position, insertion portion 56 is distant from second bottom surface 48a.

Mount portion 55 includes a mount portion upper surface 51, a mount portion lower surface 52, and an outer peripheral side surface 53. Mount portion lower surface 52 is located opposite to mount portion upper surface 51. Outer peripheral side surface 53 is contiguous to each of mount portion upper surface 51 and mount portion lower surface 52. Mount portion lower surface 52 is in contact with base 80. Mount portion upper surface 51 is opposed to pullout prevention portion 45. Mount portion 55 is provided with a third insertion hole 54. Third insertion hole 54 may open in each of mount portion upper surface 51 and mount portion lower surface 52. Protruding portion 46 of upper component 40 is inserted in third insertion hole 54. Protruding portion 46 may be distant from base 80. Lower component 50 and upper component 40 are combined with each other. Lower component 50 is tilted together with upper component 40.

Biasing portion 9 is provided between upper component 40 and lower component 50. Biasing portion 9 is, for example, a coil spring. Biasing portion 9 is provided to surround insertion portion 56. Biasing portion 9 is arranged in first insertion hole 49. Biasing portion 9 has an upper end in contact with first bottom surface 49a. Biasing portion 9 has a lower end in contact with base upper surface 81. Biasing portion 9 biases upper component 40 and lower component 50 in a direction in which upper component 40 and lower component 50 are distant from each other in the upward-downward direction. In other words, while biasing portion 9 biases upper component 40 upward, it biases lower component 50 downward.

Second guide portion 32 is provided below second support portion 21. Second guide portion 32 is in contact with second support lower surface 24. Second guide portion 32 is arranged on each of opposing sides of lower component 50 in first direction X. Second guide portion 32 guides slide of second slide portion 20 from below. Second guide portion 32 protrudes upward from base upper surface 81.

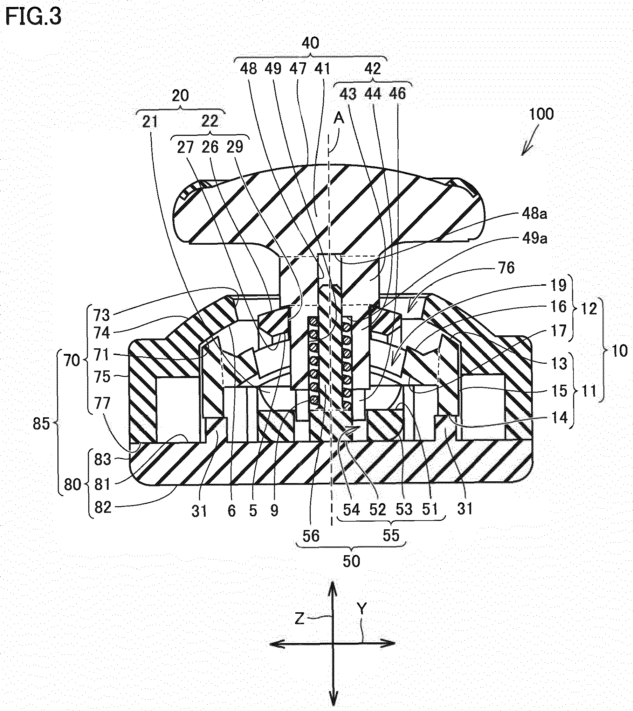

Fig. 3 is a second schematic cross-sectional view of direction input device 100 according to the first embodiment. The second schematic cross-sectional view is a view along second direction Y. As shown in Fig. 3, first guide portion 31 is provided below first support portion 11. First guide portion 31 is in contact with first support lower surface 14. First guide portion 31 is arranged on each of opposing sides of lower component 50 in second direction Y. First guide portion 31 guides slide of first slide portion 10 from below. First guide portion 31 protrudes upward from base upper surface 81.

As shown in Fig. 3, first support upper surface 13 of first support portion 11 may be distant from first rear surface 71 of upper housing portion 70. In upward-downward direction Z, second shaft member 44 penetrates each of first hole 19 and second hole 29. In second direction Y, second hole 29 may be longer than second shaft member 44 and shorter than first shaft member 43. In second direction Y, first hole 19 may be longer than second hole 29.

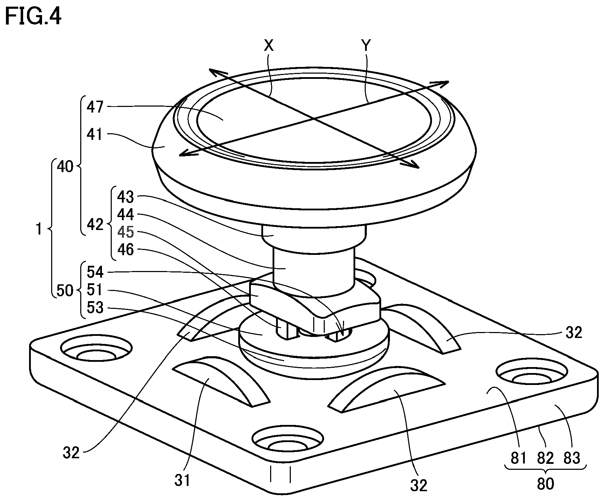

Fig. 4 is a second schematic perspective view showing the construction of direction input device 100 according to the first embodiment. Fig. 4 shows input portion 1, base 80, first guide portion 31, and second guide portion 32 and does not show other members. As shown in Fig. 4, in first direction X, pullout prevention portion 45 may be longer than second shaft member 44. In second direction Y, pullout prevention portion 45 may be substantially as long as second shaft member 44. A length of pullout prevention portion 45 in first direction X may be longer than a length of pullout prevention portion 45 in second direction Y.

A method of attaching input portion 1 to second slide portion 20 and first slide portion 10 will now be described. Shaft 42 of input portion 1 may penetrate each of first hole 19 and second hole 29. In this case, input portion 1 can be attached to each of first slide portion 10 provided with first hole 19 and second slide portion 20 provided with second hole 29, without input portion 1 being divided. Specifically, initially, shaft 42 of input portion 1 is inserted in second hole 29 (see Fig. 1) in second slide portion 20, and thereafter shaft 42 is turned by 90°. Pullout prevention portion 45 of input portion 1 can thus be prevented from coming out of second hole 29. Then, shaft 42 of input portion 1 is inserted in first hole 19 (see Fig. 1) in first slide portion 10, and thereafter shaft 42 is turned further by 90°. Pullout prevention portion 45 of input portion 1 can thus be prevented from coming out of first hole 19.

Operated portion 41 and shaft 42 may be formed integrally with or separately from each other. In an example where operated portion 41 and shaft 42 are integrally formed, the number of components can be smaller than in an example where they are formed as separate divided components.

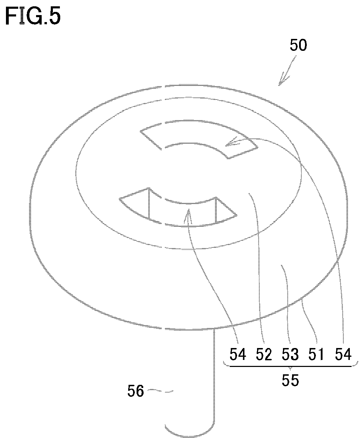

Fig. 5 is a schematic perspective view showing a construction of lower component 50 of direction input device 100 according to the first embodiment. As shown in Fig. 5, mount portion 55 of lower component 50 is substantially in a shape of a disc. Each of mount portion upper surface 51 and mount portion lower surface 52 is substantially circular. Outer peripheral side surface 53 may decrease in diameter from mount portion upper surface 51 toward mount portion lower surface 52. When viewed in upward-downward direction Z, third insertion hole 54 may be in a shape in conformity with an arc. Insertion portion 56 is, for example, columnar.

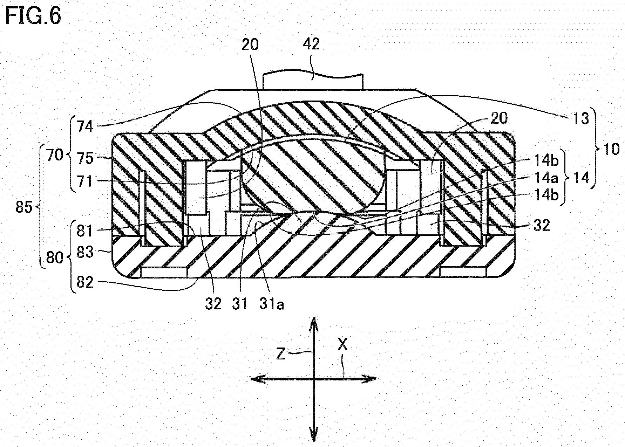

Fig. 6 is a third schematic cross-sectional view of direction input device 100 according to the first embodiment. The third schematic cross-sectional view is a view along first direction X intersecting with first guide portion 31. First guide portion 31 may include a first guide surface 31a over which first slide portion 10 slides. As shown in Fig. 6, when viewed in second direction Y, first guide surface 31a may be curved convexly upward. First guide surface 31a is, for example, in an arc shape. A center of curvature of first guide surface 31a may coincide with a center of curvature of first slid surface 5.

First guide portion 31 may function as a switch to be pressed down by first slide portion 10. As input portion 1 is pressed downward, first slide portion 10 is pressed downward. For example, first guide portion 31 and base 80 are provided as members separate from each other, with a biasing member (not shown) lying therebetween, and when first guide portion 31 is pressed down by first slide portion 10, first guide portion 31 may press down the biasing member and enter the inside of base 80. As first guide portion 31 is pressed down, the switch may be switched on or off. Direction input device 100 according to the first embodiment, however, does not have to include first guide portion 31.

First support lower surface 14 of first slide portion 10 may include a first region 14a and a second region 14b. Second region 14b is located on each of opposing sides of first region 14a. Second region 14b is contiguous to first region 14a. First region 14a is curved in conformity with first guide surface 31a. First region 14a is curved concavely upward. A curvature of first region 14a may coincide with a curvature of first guide surface 31a. Second region 14b may be curved convexly downward.

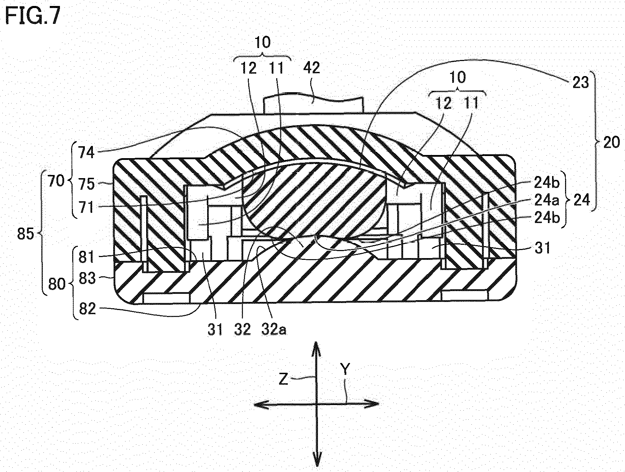

Fig. 7 is a fourth schematic cross-sectional view of direction input device 100 according to the first embodiment. The fourth schematic cross-sectional view is a view along second direction Y intersecting with second guide portion 32. Second guide portion 32 may include a second guide surface 32a over which second slide portion 20 slides. Second support lower surface 24 of second slide portion 20 may include a third region 24a and a fourth region 24b. Fourth region 24b is located on each of opposing sides of third region 24a. Fourth region 24b is contiguous to third region 24a. Since second guide surface 32a is similar in shape to first guide surface 31a and second support lower surface 24 is similar in shape to first support lower surface 14, detailed description will not be provided. Direction input device 100 according to the first embodiment, however, does not have to include second guide portion 32.

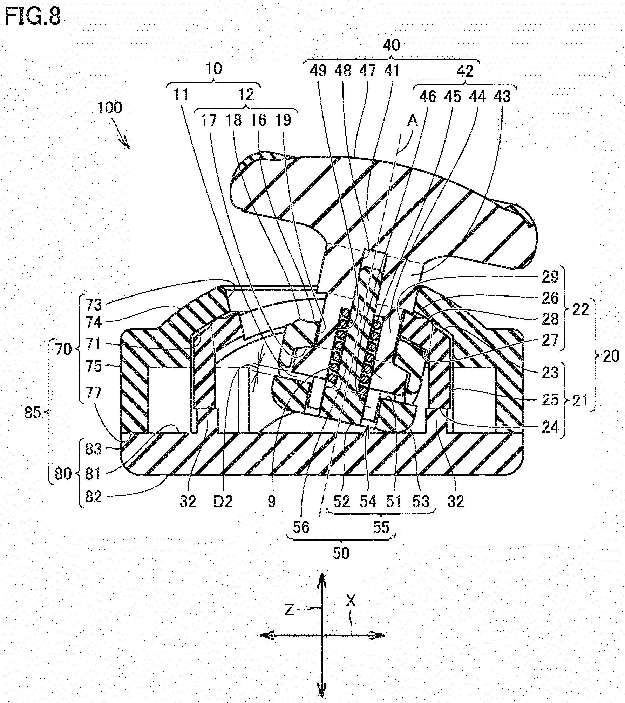

Motions of first slide portion 10 and second slide portion 20 will now be described. Fig. 8 is a schematic cross-sectional view illustrating a motion of first slide portion 1 of direction input device 100 according to the first embodiment. The schematic cross-sectional view shown in Fig. 8 is a view along first direction X. As shown in Fig. 8, when input portion 1 is tilted in first direction X, first slide portion 10 moves with the motion of input portion 1. Specifically, first slide portion 10 slides in first direction X with tilting of input portion 1 from the initial position in first direction X. First projection 18 of first slide portion 10 slides over second main body lower surface 27 of second slide portion 20 while it abuts thereon. Second main body lower surface 27 is the first slid surface. While first slide portion 10 moves in first direction X, second slide portion 20 does not substantially move.

As shown in Fig. 8, when the user tilts input portion 1 to the right, with a right portion of mount portion 55 of lower component 50 being in contact with base 80, a left portion of mount portion 55 moves away from base 80. An interval D2 between upper component 40 and lower component 50 at the time of tilting of input portion 1 from the initial position becomes smaller than an interval D1 (see Fig. 2) between upper component 40 and lower component 50 at the time when input portion 1 is located at the initial position, and consequently, biasing portion 9 is compressed.

When input portion 1 is tilted in first direction X, shaft 42 of input portion 1 can abut on first inner side surface 73 of upper housing portion 70. In other words, when input portion 1 is tilted in first direction X, the motion of shaft 42 of input portion 1 is restricted by first inner side surface 73 of upper housing portion 70. When the user releases input portion 1, owing to resilience of biasing portion 9, the left portion of mount portion 55 of lower component 50 moves toward base 80. Input portion 1 and first slide portion 10 thus return to the initial position (see Fig. 2).

Base 80 is in such a shape that biasing force applied by biasing portion 9 to lower component 50 acts to move input portion 1 back to the initial position when input portion 1 is tilted from the initial position. In direction input device 100 according to the first embodiment, base upper surface 81 is planar. When base upper surface 81 is in a curved shape, base upper surface 81 may be larger in radius of curvature than mount portion lower surface 52.

A motion of second slide portion 20 will now be described. When input portion 1 is tilted in second direction Y, second slide portion 20 moves with the motion of input portion 1. Specifically, second slide portion 20 slides in second direction Y with tilting of input portion 1 from the initial position in second direction Y. Second projection 28 (see Fig. 2) of second slide portion 20 slides over second slid surface 6 of upper housing portion 70 while it abuts thereon. While second slide portion 20 moves in second direction Y, first slide portion 10 does not substantially move.

A mechanism of return of second slide portion 20 to the initial position is similar to a mechanism of return of first slide portion 10 to the initial position. When viewed in upward-downward direction Z, input portion 1 can be tilted in first direction X, tilted also in second direction Y, and also in a direction inclined with respect to each of first direction X and second direction Y.

### (Second Embodiment)

An overview of a construction of direction input device 100 according to a second embodiment will now be described. Direction input device 100 according to the second embodiment is different from direction input device 100 according to the first embodiment mainly in including a first sensor 60, a first slider 91, and a second slider 92, whereas it is otherwise similar in construction to direction input device 100 according to the first embodiment. A construction different from direction input device 100 according to the first embodiment will mainly be described below.

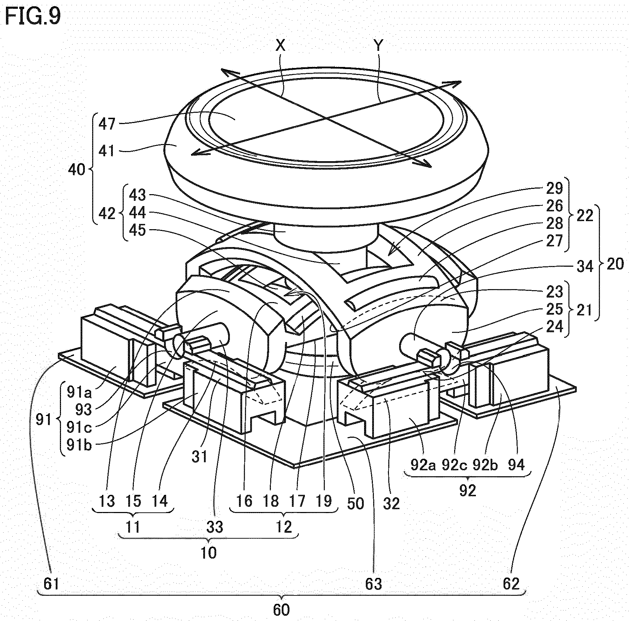

Fig. 9 is a schematic perspective view showing the construction of direction input device 100 according to the second embodiment. As shown in Fig. 9, direction input device 100 according to the second embodiment further includes first sensor 60, first slider 91, and second slider 92. Fig. 9 does not show module housing 85. As shown in Fig. 9, first sensor 60 includes a first contact 61, a second contact 62, and a third contact 63. When viewed in upward-downward direction Z, third contact 63 may be, for example, in an L shape. Each of first contact 61 and second contact 62 is, for example, rectangular.

First slide portion 10 includes a first protruding portion 33. First protruding portion 33 is provided on first support side surface 15 of first support portion 11. First protruding portion 33 protrudes along second direction Y. Similarly, second slide portion 20 includes a second protruding portion 34. Second protruding portion 34 is provided on second support side surface 25 of second support portion 21. Second protruding portion 34 protrudes along first direction X.

As shown in Fig. 9, first slider 91 is provided with a first recess 93. First protruding portion 33 is arranged in first recess 93. First slider 91 makes a linear motion with slide of first slide portion 10. First protruding portion 33 moves first slider 91 with movement of first slide portion 10. Specifically, when first protruding portion 33 moves with movement of first slide portion 10, first slider 91 is moved with motion of first protruding portion 33. First slider 91 moves in first direction X. When viewed in upward-downward direction Z, a direction of movement of first slider 91 is the same as a direction of movement of first protruding portion 33.

First slider 91 includes a first slide member 91a, a second slide member 91b, a first connection member 91c, and a not-shown conducting member made of metal. First connection member 91c connects first slide member 91a and second slide member 91b to each other. The conducting member has one end located in first slide member 91a. The conducting member has the other end located in second slide member 91b. First slide member 91a is in contact, for example, with first contact 61. Second slide member 91b is in contact, for example, with third contact 63. With movement of first slider 91, an electrical resistance between first contact 61 and third contact 63 may vary. First sensor 60 may thus detect the electrical resistance that varies with motion of first slider 91.

As shown in Fig. 9, second slider 92 is provided with a second recess 94. Second protruding portion 34 is arranged in second recess 94. Second slider 92 makes a linear motion with slide of second slide portion 20. Second protruding portion 34 moves second slider 92 with movement of second slide portion 20. Specifically, when second protruding portion 34 moves with movement of second slide portion 20, second slider 92 is moved with motion of second protruding portion 34. Second slider 92 moves in second direction Y. When viewed in upward-downward direction Z, a direction of movement of second slider 92 is the same as a direction of movement of second protruding portion 34.

Second slider 92 includes a third slide member 92a, a fourth slide member 92b, a second connection member 92c, and a not-shown conducting member made of metal. Second connection member 92c connects third slide member 92a and fourth slide member 92b to each other. The conducting member has one end located in third slide member 92a. The conducting member has the other end located in fourth slide member 92b. Third slide member 92a is in contact, for example, with third contact 63. Fourth slide member 92b is in contact, for example, with second contact 62. With movement of second slider 92, an electrical resistance between third contact 63 and second contact 62 may vary. First sensor 60 may thus detect the electrical resistance that varies with motion of second slider 92.

According to direction input device 100 according to the second embodiment, first slide portion 10 and second slide portion 20 can serve also as a detection mechanism. Therefore, a space or the number of components can be smaller than in an example where direction input device 100 includes a detection mechanism as a separate component.

### (Third Embodiment)

An overview of a construction of direction input device 100 according to a third embodiment will now be described. Direction input device 100 according to the third embodiment is different from direction input device 100 according to the first embodiment mainly in that recovery force of lower component 50 varies depending on the direction of tilt, whereas it is otherwise similar in construction to direction input device 100 according to the first embodiment. A construction different from direction input device 100 according to the first embodiment will mainly be described below.

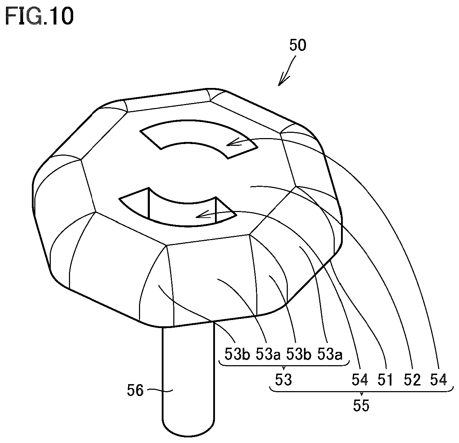

Fig. 10 is a schematic perspective view showing the construction of lower component 50 of direction input device 100 according to the third embodiment. Each of mount portion upper surface 51 and mount portion lower surface 52 is, for example, substantially octagonal. The shape of each of mount portion upper surface 51 and mount portion lower surface 52 is not limited to a substantially octagonal shape. Each of mount portion upper surface 51 and mount portion lower surface 52 may be in a polygonal shape other than the octagonal shape or in a shape other than the polygonal shape, such as an oval spherical shape. Outer peripheral side surface 53 includes a first side surface region 53a and a second side surface region 53b. In outer peripheral side surface 53, first side surface region 53a and second side surface region 53b are alternately provided. First side surface region 53a corresponds to a side of a polygon and second side surface region 53b corresponds to a corner of the polygon.

In a cross-section including a central axis along a direction of extension of insertion portion 56 and being in parallel to upward-downward direction Z, second side surface region 53b may be larger in curvature than first side surface region 53a. In this case, recovery force of input portion 1 when input portion 1 is tilted in a direction toward second side surface region 53b is larger than recovery force of input portion 1 when input portion 1 is tilted in a direction toward first side surface region 53a. In other words, lower component 50 is in a shape that varies recovery force depending on the direction of tilt. From another point of view, lower component 50 is anisotropic in terms of the direction of tilt.

Base 80 may be in a shape that varies recovery force depending on the direction of tilt. In this case, the curvature of base upper surface 81 may be different depending on the direction of tilt in a cross-section including axial line A and being in parallel to upward-downward direction Z.

### (Fourth Embodiment)

An overview of a construction of direction input device 100 according to a fourth embodiment will now be described. Direction input device 100 according to the fourth embodiment is different from direction input device 100 according to the first embodiment mainly in that base upper surface 81 includes an upper curved surface 81a, whereas it is otherwise similar in construction to direction input device 100 according to the first embodiment. A construction different from direction input device 100 according to the first embodiment will mainly be described below.

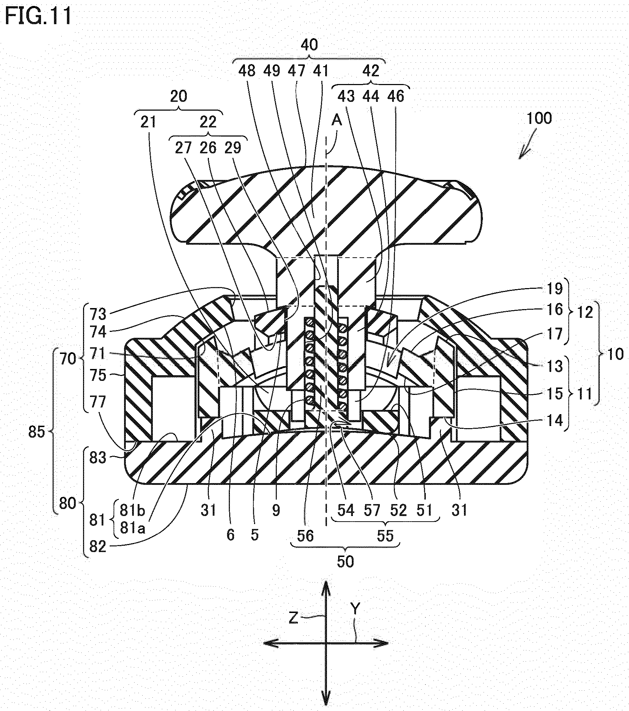

Fig. 11 is a schematic cross-sectional view showing the construction of direction input device 100 according to the fourth embodiment. The schematic cross-sectional view shown in Fig. 11 is a view along second direction Y. As shown in Fig. 11, base upper surface 81 includes an upper curved surface 81a and an upper plane 81b. Upper curved surface 81a is curved convexly upward. Upper curved surface 81a is opposed to lower component 50. Upper plane 81b is located on each of opposing sides of upper curved surface 81a.

Second slid surface 6 may be in a partially spherical shape formed such that input portion 1 is tilted with respect to the virtual center. Upper curved surface 81a may be smaller in curvature than second slid surface 6. The virtual center of upper curved surface 81a is located below the virtual center of second slid surface 6. The virtual center of second slid surface 6 is located on the outside of module housing 85. Similarly, first slid surface 5 may be in a partially spherical shape formed such that input portion 1 is tilted with respect to the virtual center. Upper curved surface 81a may be smaller in curvature than first slid surface 5. The virtual center of upper curved surface 81a is located below the virtual center of first slid surface 5. The virtual center of first slid surface 5 is located on the outside of module housing 85. Mount portion lower surface 52 of lower component 50 includes a lower curved surface 57. Lower curved surface 57 is opposed to upper curved surface 81a. Lower curved surface 57 is curved concavely upward. Upper curved surface 81a may be smaller in curvature than lower curved surface 57.

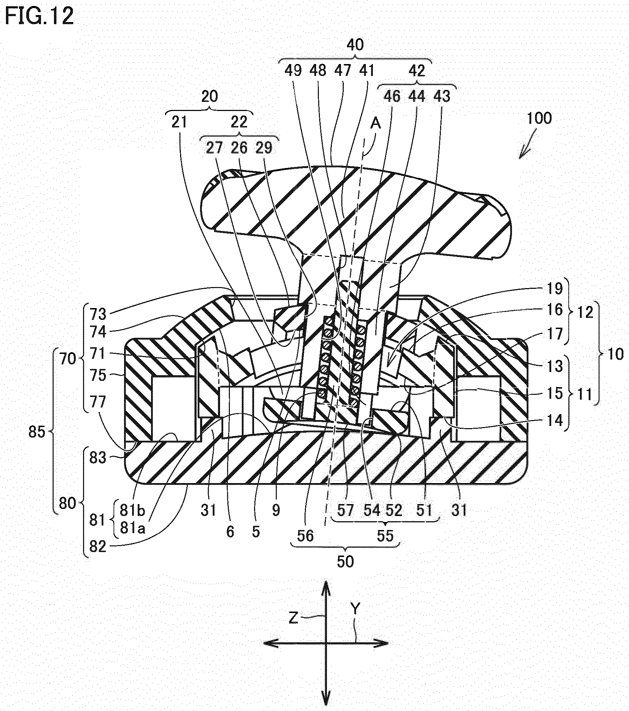

Fig. 12 is a schematic cross-sectional view illustrating a motion of second slide portion 20 of direction input device 100 according to the fourth embodiment. The schematic cross-sectional view shown in Fig. 12 is a view along second direction Y. As shown in Fig. 12, when input portion 1 is tilted in second direction Y, second slide portion 20 moves with motion of input portion 1. Specifically, second slide portion 20 slides in second direction Y with tilting of input portion 1 from the initial position in second direction Y. When the user tilts input portion 1 to the right, with the right portion of mount portion 55 of lower component 50 being in contact with base 80, the left portion of mount portion 55 moves away from base 80. At this time, with decrease in interval between upper component 40 and lower component 50, biasing portion 9 is compressed. When the user releases input portion 1, owing to resilience of biasing portion 9, the left portion of mount portion 55 of lower component 50 moves toward base 80. Input portion 1 and second slide portion 20 thus return to the initial position (see Fig. 11).

### (Fifth Embodiment)

An overview of a construction of direction input device 100 according to a fifth embodiment will now be described. Direction input device 100 according to the fifth embodiment is different from direction input device 100 according to the first embodiment mainly in that base 80 is provided with a hole 86, whereas it is otherwise similar in construction to direction input device 100 according to the first embodiment. A construction different from direction input device 100 according to the first embodiment will mainly be described below.

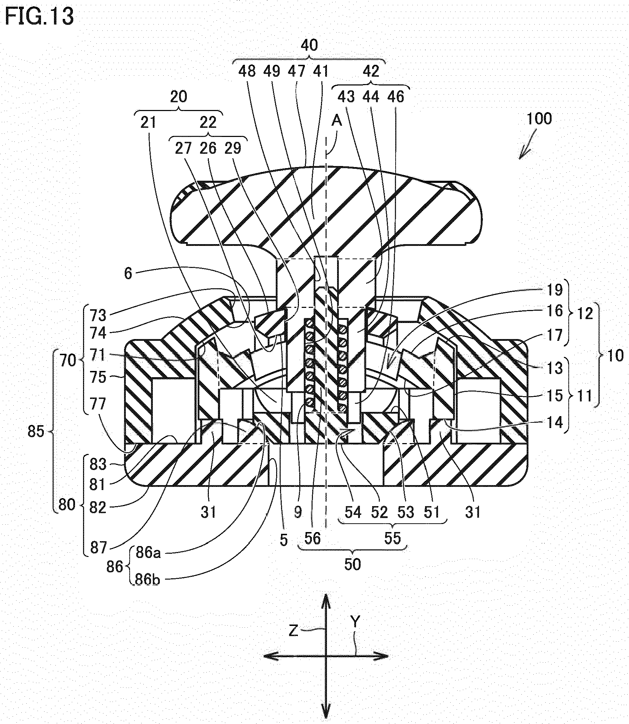

Fig. 13 is a schematic cross-sectional view showing the construction of direction input device 100 according to the fifth embodiment. As shown in Fig. 13, base 80 of direction input device 100 according to the fifth embodiment includes an annular protrusion 87. Annular protrusion 87 is located on base upper surface 81. Annular protrusion 87 surrounds outer peripheral side surface 53 of mount portion 55. Base 80 is provided with hole 86. Hole 86 includes a first inner peripheral side surface 86a and a second inner peripheral side surface 86b. First inner peripheral side surface 86a is formed by annular protrusion 87.

First inner peripheral side surface 86a is contiguous to second inner peripheral side surface 86b. Second inner peripheral side surface 86b is located below first inner peripheral side surface 86a. First inner peripheral side surface 86a has an inner diameter decreasing downward. The inner diameter of second inner peripheral side surface 86b does not substantially vary downward. Mount portion lower surface 52 of mount portion 55 may enter hole 86. Mount portion lower surface 52 may be distant from base 80. First inner peripheral side surface 86a may surround outer peripheral side surface 53 of lower component 50. At the initial position, the entire periphery of first inner peripheral side surface 86a may be in contact with outer peripheral side surface 53.

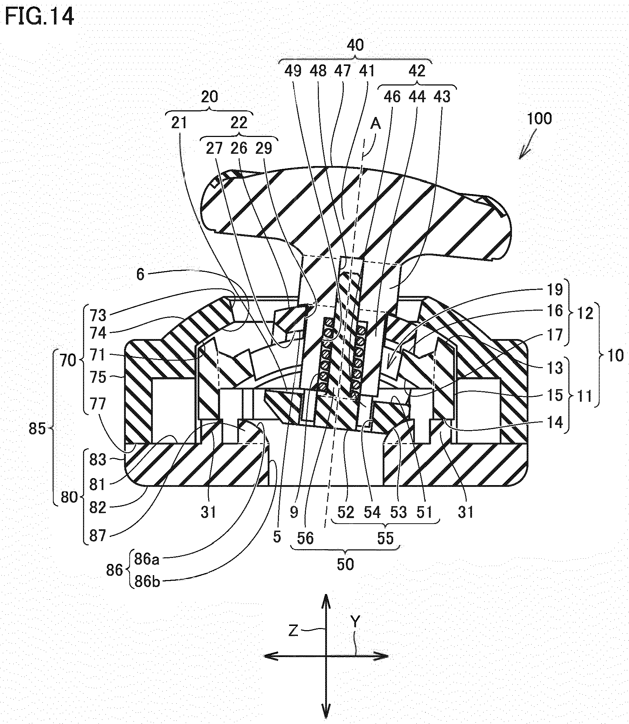

Fig. 14 is a schematic cross-sectional view illustrating a motion of second slide portion 20 of direction input device 100 according to the fifth embodiment. The schematic cross-sectional view shown in Fig. 14 is a view along second direction Y. As shown in Fig. 14, when input portion 1 is tilted to the right, with the right portion of outer peripheral side surface 53 being in contact with first inner peripheral side surface 86a, the left portion of outer peripheral side surface 53 moves away from first inner peripheral side surface 86a. At this time, with decrease in interval between upper component 40 and lower component 50, biasing portion 9 is compressed. When the user releases input portion 1, owing to resilience of biasing portion 9, the left portion of outer peripheral side surface 53 of lower component 50 moves toward base 80. Input portion 1 and second slide portion 20 thus return to the initial position (see Fig. 13).

### (Sixth Embodiment)

An overview of a construction of direction input device 100 according to a sixth embodiment will now be described. Direction input device 100 according to the sixth embodiment is different from direction input device 100 according to the first embodiment mainly in that first slid surface 5 is formed on first rear surface 71 of upper housing portion 70, whereas it is otherwise similar in construction to direction input device 100 according to the first embodiment. A construction different from direction input device 100 according to the first embodiment will mainly be described below.

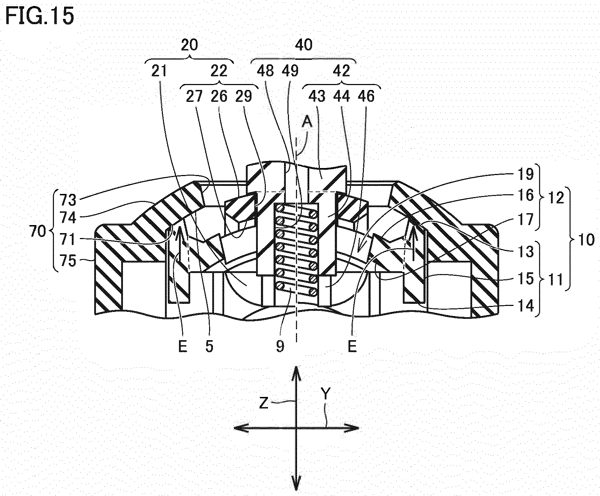

Fig. 15 is a schematic cross-sectional view showing the construction of direction input device 100 according to the sixth embodiment. The schematic cross-sectional view shown in Fig. 15 is a view along second direction Y. With first slide portion 10 being biased upward by upper component 40, first support upper surface 13 of first slide portion 10 is pressed against first rear surface 71 of upper housing portion 70 (see an arrow E). First slide portion 10 slides over first rear surface 71 of upper housing portion 70. In other words, first slid surface 5 is formed on first rear surface 71 of upper housing portion 70. In direction input device 100 according to the sixth embodiment, each of the first slid surface and the second slid surface is formed on first rear surface 71 of upper housing portion 70.

Direction input device 100 may include a top plate component (not shown) that covers each of first slide portion 10 and second slide portion 20. The top plate component may include each of first slid surface 5 and second slid surface 6.

### (Seventh Embodiment)

An overview of a construction of direction input device 100 according to a seventh embodiment will now be described. Direction input device 100 according to the seventh embodiment is different from direction input device 100 according to the first embodiment mainly in that first shaft member 43 is constructed to press down first slide portion 10 without pressing down second slide portion 20, whereas it is otherwise similar in construction to direction input device 100 according to the first embodiment. A construction different from direction input device 100 according to the first embodiment will mainly be described below.

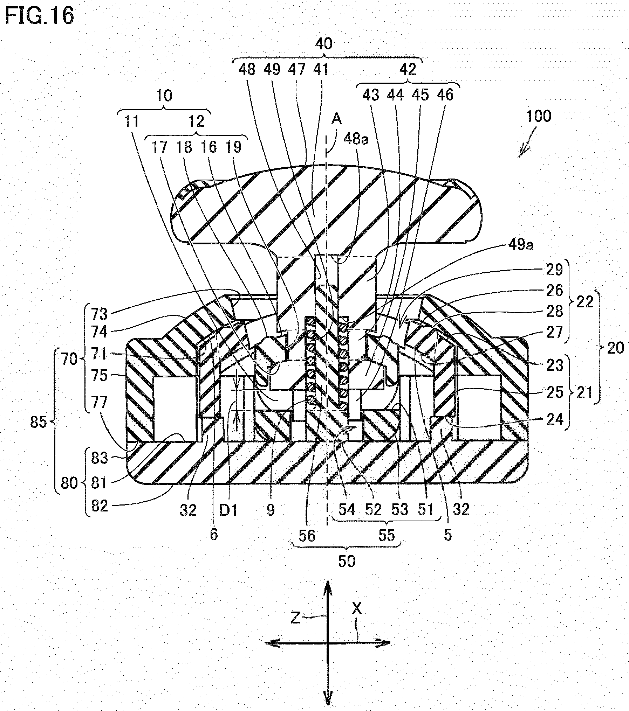

Fig. 16 is a schematic cross-sectional view of direction input device 100 according to the seventh embodiment. The schematic cross-sectional view shown in Fig. 16 is a view along first direction X. As shown in Fig. 16, at the initial position, a part of first shaft member 43 may be located in second hole 29. When input portion 1 is pressed down, first shaft member 43 presses down first slide portion 10 without pressing down second slide portion 20. When input portion 1 is pressed down, first shaft member 43 does not abut on second slide portion 20. A boundary between first shaft member 43 and second shaft member 44 may be located in second hole 29.

### (Eighth Embodiment)

An overview of a construction of direction input device 100 according to an eighth embodiment will now be described. Direction input device 100 according to the eighth embodiment is different from direction input device 100 according to the first embodiment mainly in that pullout prevention portion 45 is prevented from coming out of second hole 29 in second slide portion 20, whereas it is otherwise similar in construction to direction input device 100 according to the first embodiment. A construction different from direction input device 100 according to the first embodiment will mainly be described below.

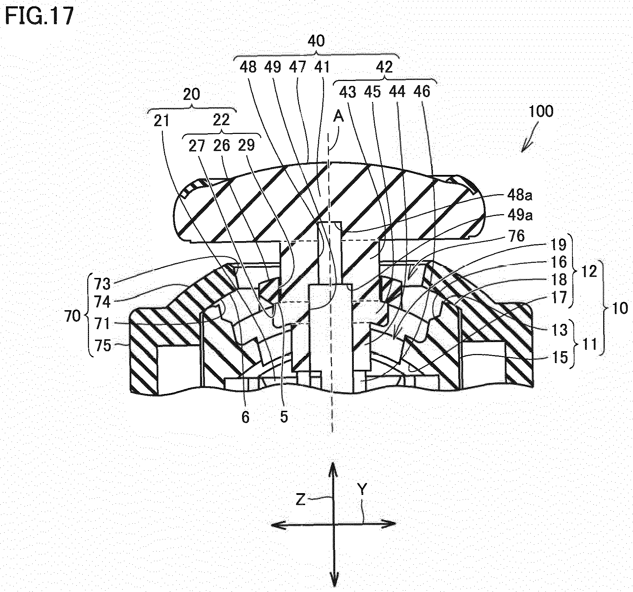

Fig. 17 is a first schematic cross-sectional view of direction input device 100 according to the eighth embodiment. The schematic cross-sectional view shown in Fig. 17 is a view along second direction Y. As shown in Fig. 17, in the cross-section that passes through axial line A and is in parallel to second direction Y, pullout prevention portion 45 may be located above first main body lower surface 17 and below second main body lower surface 27. Pullout prevention portion 45 is constructed to prevent input portion 1 from coming out of second hole 29 in second slide portion 20. Pullout prevention portion 45 may be in contact with second main body lower surface 27. Pullout prevention portion 45 is located below first shaft member 43. Pullout prevention portion 45 is contiguous to first shaft member 43. Second shaft member 44 is located below pullout prevention portion 45. Second shaft member 44 is contiguous to pullout prevention portion 45. In the upward-downward direction, pullout prevention portion 45 is located between first shaft member 43 and second shaft member 44.

First shaft member 43 may be located in second hole 29. Second shaft member 44 may be located in first hole 19. In second direction Y, first shaft member 43 may be longer than second shaft member 44. In second direction Y, pullout prevention portion 45 may be longer than first shaft member 43. In second direction Y, pullout prevention portion 45 may be longer than second shaft member 44.

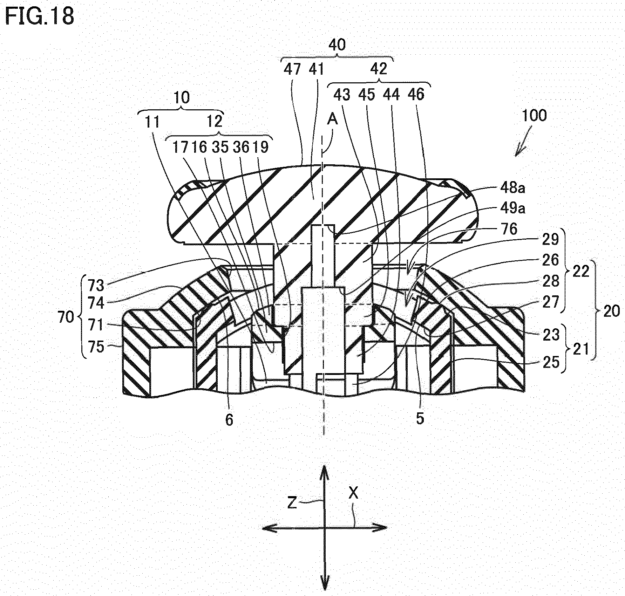

Fig. 18 is a second schematic cross-sectional view of direction input device 100 according to the eighth embodiment. The schematic cross-sectional view shown in Fig. 18 is a view along first direction X. First main body portion 12 includes a basis portion 35 and a rotation stop portion 36. Rotation stop portion 36 is provided on basis portion 35. Basis portion 35 forms first main body lower surface 17. Rotation stop portion 36 forms first main body upper surface 16. Rotation stop portion 36 can restrict rotation of shaft 42. In first direction X, rotation stop portion 36 may be arranged on each of opposing sides of pullout prevention portion 45. When shaft 42 attempts to rotate around axial line A as the rotation axis, rotation of shaft 42 is restricted by abutment of pullout prevention portion 45 on rotation stop portion 36.

As shown in Fig. 18, in first direction X, first shaft member 43 may be longer than second shaft member 44. In first direction X, pullout prevention portion 45 may be substantially as long as first shaft member 43. In first direction X, pullout prevention portion 45 may be longer than second shaft member 44. Though a construction in which first main body portion 12 includes a rotation stop mechanism in direction input device 100 according to the present embodiment is described, rotation of shaft 42 may be restricted by an appropriate mechanism (for example, an adhesive mechanism or an engagement mechanism) also in another embodiment.

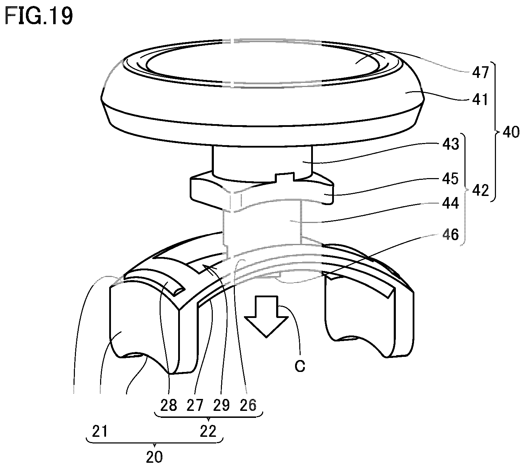

A method of assembling direction input device 100 according to the eighth embodiment will now be described. Fig. 19 is a schematic perspective view showing a first step in a method of assembling direction input device 100 according to the eighth embodiment. As shown in Fig. 19, shaft 42 of upper component 40 is inserted in second hole 29 in second slide portion 20 along a direction shown with an arrow C. Pullout prevention portion 45 penetrates second hole 29 and it is arranged below second hole 29.

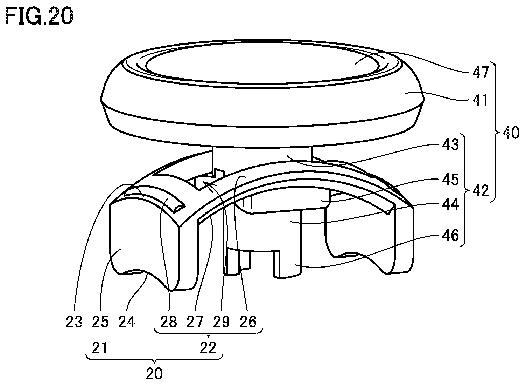

Fig. 20 is a schematic perspective view showing a second step in the method of assembling direction input device 100 according to the eighth embodiment. As shown in Fig. 20, shaft 42 of upper component 40 is inserted in second hole 29 in second slide portion 20, and thereafter turned by 90°. Pullout prevention portion 45 of upper component 40 can thus be prevented from coming out of second hole 29. From another point of view, pullout prevention portion 45 is prevented from coming out of second hole 29 in second slide portion 20.

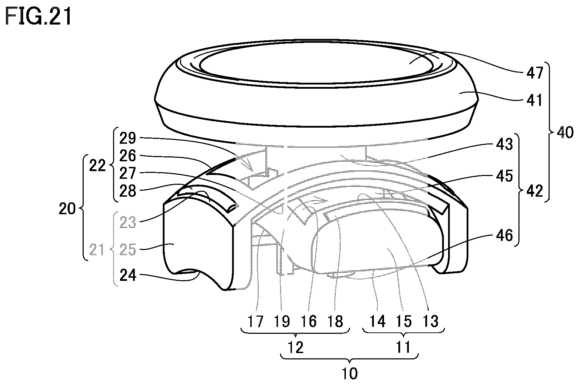

Fig. 21 is a schematic perspective view showing a third step in the method of assembling direction input device 100 according to the eighth embodiment. As shown in Fig. 21, first slide portion 10 is arranged below second slide portion 20. First slide portion 10 is attached to upper component 40 such that shaft 42 penetrates first hole 19 in first slide portion 10. According to this assembly method, input portion 1 is turned by 90° only once. Therefore, a process of assembly of direction input device 100 can be simplified.

### (Ninth Embodiment)

An overview of a construction of direction input device 100 according to a ninth embodiment will now be described. Direction input device 100 according to the ninth embodiment is different from direction input device 100 according to the first embodiment mainly in that a gap is provided between first shaft member 43 and second slide portion 20, whereas it is otherwise similar in construction to direction input device 100 according to the first embodiment. A construction different from direction input device 100 according to the first embodiment will mainly be described below.

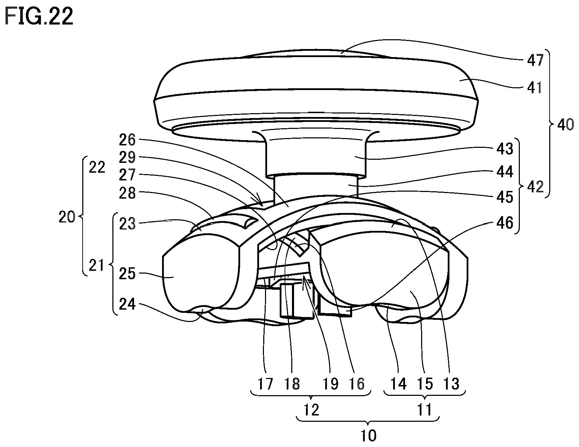

Fig. 22 is a schematic perspective view of direction input device 100 according to the ninth embodiment. Fig. 22 shows upper component 40, first slide portion 10, and second slide portion 20, and does not show other members. As shown in Fig. 22, a gap is provided between first shaft member 43 and second slide portion 20. First shaft member 43 is distant from second main body upper surface 26 of second slide portion 20. Second shaft member 44 penetrates second hole 29 in second slide portion 20 and extends above second hole 29. A part of second shaft member 44 is located above second main body upper surface 26.

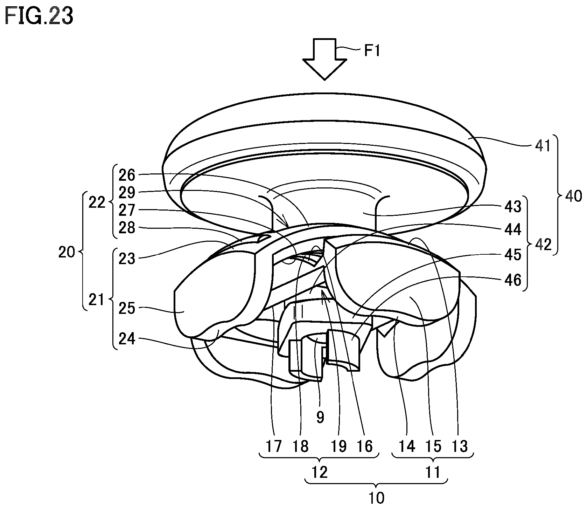

A method of assembling direction input device 100 according to the ninth embodiment will now be described. Fig. 23 is a schematic perspective view showing a first step in the method of assembling direction input device 100 according to the ninth embodiment. As shown in Fig. 23, shaft 42 of upper component 40 is inserted in second hole 29 in second slide portion 20 and first hole 19 in first slide portion 10 along a direction shown with an arrow F1. Pullout prevention portion 45 penetrates each of second hole 29 and first hole 19 and is arranged below first hole 19. Shaft 42 is further pressed in until an upper surface of pullout prevention portion 45 is arranged below first main body lower surface 17 of first main body portion 12. In this state, shaft 42 is turned by 90°. By providing a gap between first shaft member 43 and second slide portion 20 to allow further pressing-in of pullout prevention portion 45, shaft 42 can be turned by 90° without contact of pullout prevention portion 45 with first main body portion 12.

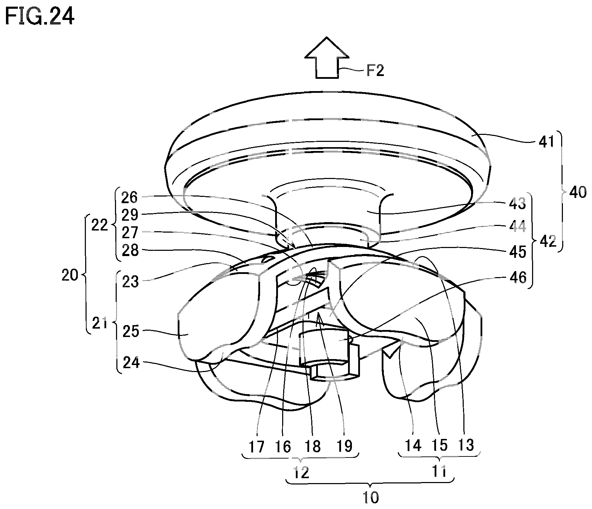

Fig. 24 is a schematic perspective view showing a second step in the method of assembling direction input device 100 according to the ninth embodiment. As shown in Fig. 24, shaft 42 is turned by 90° and thereafter shaft 42 is pulled up in a direction shown with an arrow F2. Pullout prevention portion 45 is thus accommodated in first main body portion 12 and assembly of upper component 40, first slide portion 10, and second slide portion 20 is completed.

### [B. Controller]

A construction of a controller 110 according to the present disclosure will now be described. Controller 110 according to the present disclosure mainly includes direction input device 100 and a controller housing 3. Direction input device 100 is provided in controller housing 3.

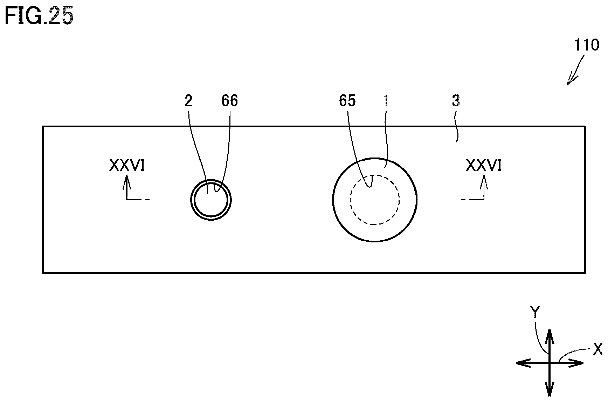

Fig. 25 is a schematic plan view showing the construction of controller 110 according to the present disclosure. As shown in Fig. 25, controller housing 3 is, for example, substantially in a shape of a parallelepiped. Controller housing 3 is provided with a first through hole 65. Input portion 1 is arranged in first through hole 65. A part of input portion 1 is located on the outside of controller housing 3.

Controller housing 3 is provided with a second through hole 66. A button 2 is arranged in second through hole 66. A part of button 2 is located on the outside of controller housing 3. Button 2 is to be operated by a user. Controller housing 3 extends, for example, along first direction X. First direction X is, for example, a longitudinal direction of controller housing 3. Second direction Y is, for example, a direction of a short side of controller housing 3. In a plan view, input portion 1 and button 2 may be aligned along first direction X.

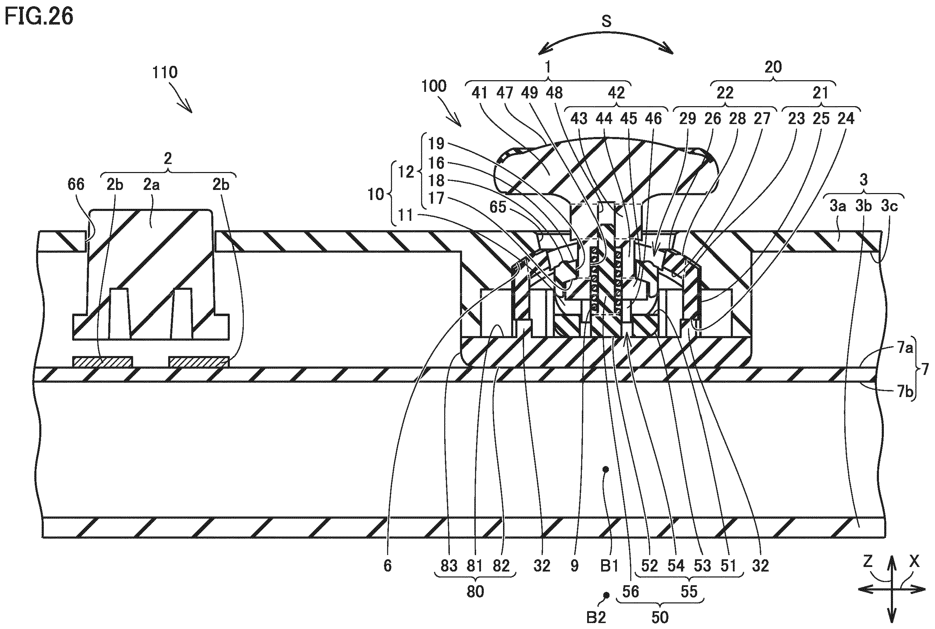

Fig. 26 is a schematic cross-sectional view along the line XXVI-XXVI in Fig. 25. The cross-section shown in Fig. 26 is in parallel to first direction X. As shown in Fig. 26, controller 110 may include a substrate 7. Substrate 7 is arranged in the inside of controller housing 3. Substrate 7 includes a substrate front surface 7a and a substrate rear surface 7b. Substrate rear surface 7b is located opposite to substrate front surface 7a. Controller housing 3 is constituted of a front-surface-side housing portion 3a and a rear-surface-side housing portion 3b. Front-surface-side housing portion 3a is combined with rear-surface-side housing portion 3b. Substrate 7 is located between front-surface-side housing portion 3a and rear-surface-side housing portion 3b. Front-surface-side housing portion 3a includes a second rear surface 3c opposed to substrate 7.

As shown in Fig. 26, button 2 includes, for example, a pressing member 2a and a fourth contact 2b. Pressing member 2a is a member to be pressed by a user. Pressing member 2a is arranged in second through hole 66. Fourth contact 2b is provided on substrate front surface 7a. Fourth contact 2b is opposed to a bottom surface of pressing member 2a. When the user presses in pressing member 2a toward substrate front surface 7a of substrate 7, pressing member 2a comes in contact with fourth contact 2b. Controller 110 thus detects input from the user. When the user releases pressing member 2a, pressing member 2a moves away from fourth contact 2b owing to a not-shown pushing-back mechanism.

Input portion 1 can be tilted along a direction of tilt S. Second slid surface 6 may be in a partially spherical shape formed such that input portion 1 is tilted with respect to the virtual center. The virtual center may be located on the outside of direction input device 100 and in the inside of controller housing 3. Specifically, the virtual center is located at a first center B1 located below substrate 7. The virtual center may be located at first center B1 located between substrate 7 and rear-surface-side housing portion 3b. Similarly to second slid surface 6, the first slid surface may be in the partially spherical shape formed such that input portion 1 is tilted with respect to the virtual center.

The virtual center may be located on the outside of controller housing 3. Specifically, the virtual center may be located at a second center B2 located below rear-surface-side housing portion 3b. Substrate 7 may be located between second center B2 and input portion 1. Rear-surface-side housing portion 3b may be located between second center B2 and substrate 7.

As described above, each of the first slid surface and the second slid surface should only be in a shape curved convexly upward and the shape thereof is not limited to the partially spherical shape. When each of the first slid surface and the second slid surface is in a shape other than the partially spherical shape, the motion of input portion 1 is not a circular motion. In this case, input portion 1 does not have to have the virtual center. In this case, input portion 1 does not have to have the virtual center. Each of the first slid surface and the second slid surface may be formed on second rear surface 3c of controller housing 3. Alternatively, the second slid surface may be formed on second rear surface 3c of controller housing 3 and the first slid surface may be formed on second main body lower surface 27 of second slide portion 20. At this time, controller housing 3 can also be regarded as the module housing.

It should be understood that the embodiments disclosed herein are illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1 input portion; 2 button; 2a pressing member; 2b fourth contact; 3 controller housing; 3a front-surface-side housing portion; 3b rear-surface-side housing portion; 3c second rear surface; 5 first slid surface; 6 second slid surface; 7 substrate; 7a substrate front surface; 7b substrate rear surface; 9 biasing portion; 10 first slide portion; 11 first support portion; 12 first main body portion; 13 first support upper surface; 14 first support lower surface; 14a first region; 14b second region; 15 first support side surface; 16 first main body upper surface; 17 first main body lower surface; 18 first projection; 19 first hole; 20 second slide portion; 21 second support portion; 22 second main body portion; 23 second support upper surface; 24 second support lower surface; 24a third region; 24b fourth region; 25 second support side surface; 26 second main body upper surface; 27 second main body lower surface; 28 second projection; 29 second hole; 31 first guide portion (guide portion); 31a first guide surface (guide surface); 32 second guide portion; 32a second guide surface; 33 first protruding portion; 34 second protruding portion; 35 basis portion; 36 rotation stop portion; 40 upper component; 41 operated portion; 42 shaft; 43 first shaft member (shaft member); 44 second shaft member; 45 pullout prevention portion; 46 protruding portion; 47 operated surface; 48 second insertion hole; 48a second bottom surface; 49 first insertion hole; 49a first bottom surface; 50 lower component; 51 mount portion upper surface; 52 mount portion lower surface; 53 outer peripheral side surface; 53a first side surface region; 53b second side surface region; 54 third insertion hole; 55 mount portion; 56 insertion portion; 57 lower curved surface; 60 first sensor; 61 first contact; 62 second contact; 63 third contact; 65 first through hole; 66 second through hole; 70 upper housing portion; 71 first rear surface; 73 first inner side surface; 74 first upper surface; 75 first outer side surface; 76 shaft through hole; 77 first lower surface; 80 base; 81 base upper surface; 81a upper curved surface; 81b upper plane; 82 base lower surface; 83 base side surface; 85 module housing; 86 hole; 86a first inner peripheral side surface (inner peripheral side surface); 86b second inner peripheral side surface; 87 annular protrusion; 91 first slider; 91a first slide member; 91b second slide member; 91c first connection member; 92 second slider; 92a third slide member; 92b fourth slide member; 92c second connection member; 93 first recess; 94 second recess; 100 direction input device; 110 controller; A axial line; B1 first center; B2 second center; D1, D2 interval; C, E, F1, F2 arrow; S direction of tilt; X first direction; Y second direction; Z upward-downward direction

## Claims

1. A direction input device (100) comprising:
a tiltable input portion (1), the input portion (1) including
an upper component (40) provided, at top, with an operated surface to be operated by a user, the upper component (40) being operated to be tilted,
a lower component (50) provided below the upper component (40), the lower component (50) being tilted together with the upper component (40), and
a biasing portion (9) provided between the upper component (40) and the lower component (50), the biasing portion (9) biasing the upper component (40) and the lower component (50) in a direction in which the upper component (40) and the lower component (50) are distant from each other in an upward-downward direction;
a base (80) against which the input portion (1) is pressed from above, the base (80) being shaped such that biasing force applied by the biasing portion (9) to the lower component (50) acts to move the input portion (1) back to an initial position when the input portion (1) is tilted from the initial position;
a first slide portion (10) that slides in a first direction with tilting of the input portion (1) from the initial position in the first direction, the first slide portion (10) being provided with a first hole (19) through which the input portion (1) passes, the first hole (19) extending in a second direction perpendicular to the first direction;
a second slide portion (20) that slides in the second direction with tilting of the input portion (1) from the initial position in the second direction, the second slide portion (20) being provided with a second hole (29) through which the input portion (1) passes above the first slide portion (10), the second hole (29) extending in the first direction;
**characterized in that**
a first slid surface (5) over which the first slide portion (10) slides as being pressed against the first slid surface (5) from below by the upper component (40) biased upward by the biasing portion (9), the first slid surface (5) being in a shape curved convexly upward; and
a second slid surface (6) over which the second slide portion (20) slides as being pressed against the second slid surface(6) from below by the upper component (40) biased upward by the biasing portion (9), the second slid surface (6) being in a shape curved convexly upward.

2. The direction input device (100) according to claim 1, comprising a guide portion (31) that guides slide of the first slide portion (10) from below.

3. The direction input device (100) according to claim 2, wherein
the guide portion (31) includes a guide surface (31a) over which the first slide portion (10) slides, and
a center of curvature of the guide surface (31a) coincides with a center of curvature of the first slid surface (5).

4. The direction input device (100) according to claim 2 or 3, wherein
the guide portion (31) functions as a switch that is pressed down by the first slide portion (10).

5. The direction input device (100) according to claim 4, wherein
the input portion (1) further includes a shaft member (43), and
the shaft member (43) is constructed to press down the first slide portion (10) without pressing down the second slide portion (20) when the input portion (1) is pressed down.

6. The direction input device (100) according to any one of claims 1 to 5, wherein
the base (80) or the lower component (50) is in a shape that varies recovery force depending on a direction of tilt.

7. The direction input device (100) according to any one of claims 1 to 6, wherein
the base (80) includes an upper curved surface (81a) opposed to the lower component (50),
the second slid surface (6) is in a partially spherical shape formed such that the input portion (1) is tilted with respect to a virtual center, and
the upper curved surface (81a) is smaller in curvature than the second slid surface (6).

8. The direction input device (100) according to any one of claims 1 to 6, wherein
the base (80) is provided with a hole,
an inner peripheral side surface of the hole surrounds an outer peripheral side surface of the lower component (50), and
the inner peripheral side surface has an inner diameter decreasing downward.

9. The direction input device (100) according to any one of claims 1 to 8, further comprising a module housing (85) in which the first slide portion (10) and the second slide portion (20) are arranged, wherein
each of the first slid surface (5) and the second slid surface (6) is formed on a rear surface of the module housing (85).

10. The direction input device (100) according to any one of claims 1 to 8, further comprising a module housing (85) in which the first slide portion (10) and the second slide portion (20) are arranged, wherein
the second slid surface (6) is formed on a rear surface of the module housing (85) and the first slid surface (5) is formed on a lower surface of the second slide portion (20).

11. A controller (110) comprising:
the direction input device (100) according to any one of claims 1 to 10; and
a controller housing (3) provided with the direction input device (100), wherein
the second slid surface (6) is in a partially spherical shape formed such that the input portion (1) is tilted with respect to a virtual center, and
the virtual center is located on outside of the controller housing (3).

12. A controller (110) comprising:
the direction input device (100) according to any one of claims 1 to 10; and
a controller housing (3) provided with the direction input device (100), wherein
the second slid surface (6) is in a partially spherical shape formed such that the input portion (1) is tilted with respect to a virtual center, and
the virtual center is located on outside of the direction input device (100) and in inside of the controller housing (3).

13. The controller (110) according to claim 11 or 12, wherein
each of the first slid surface (5) and the second slid surface (6) is formed on a rear surface of the controller housing (3).

14. The controller (110) according to claim 11 or 12, wherein
the second slid surface (6) is formed on a rear surface of the controller housing (3) and the first slid surface (5) is formed on a lower surface of the second slide portion (20).

## Patentansprüche

1. Richtungseingabevorrichtung (100), umfassend:
einen kippbaren Eingabeabschnitt (1), wobei der Eingabeabschnitt (1) Folgendes beinhaltet
eine obere Komponente (40), die an der Oberseite mit einer bedienenden Oberfläche bereitgestellt ist, die von einem Benutzer zu bedienen ist, wobei die obere Komponente (40) so bedient wird, dass sie gekippt wird,
eine untere Komponente (50), die unterhalb der oberen Komponente (40) bereitgestellt ist, wobei die untere Komponente (50) zusammen mit der oberen Komponente (40) gekippt wird, und
einen Vorspannabschnitt (9), der zwischen der oberen Komponente (40) und der unteren Komponente (50) bereitgestellt ist, wobei der Vorspannabschnitt (9) die obere Komponente (40) und die untere Komponente (50) in einer Richtung vorspannt, in der die obere Komponente (40) und die untere Komponente (50) in einer Aufwärts-Abwärts-Richtung voneinander beabstandet sind;
eine Basis (80), gegen die der Eingabeabschnitt (1) von oben gedrückt wird, wobei die Basis (80) so geformt ist, dass eine Vorspannkraft wirkt, die durch den Vorspannabschnitt (9) auf die untere Komponente (50) ausgeübt wird, um den Eingabeabschnitt (1) zurück in eine Ausgangsposition zu bewegen, wenn der Eingabeabschnitt (1) aus der Ausgangsposition gekippt wird;
einen ersten Gleitabschnitt (10), der in einer ersten Richtung bei einer Neigung des Eingabeabschnitts (1) aus der Ausgangsposition in der ersten Richtung gleitet, wobei der erste Gleitabschnitt (10) mit einem ersten Loch (19) bereitgestellt ist, durch das der Eingabeabschnitt (1) verläuft, wobei sich das erste Loch (19) in einer zweiten Richtung senkrecht zu der ersten Richtung erstreckt;
einen zweiten Gleitabschnitt (20), der in der zweiten Richtung gleitet, wenn der Eingabeabschnitt (1) aus der Ausgangsposition in die zweite Richtung gekippt wird, wobei der zweite Gleitabschnitt (20) mit einem zweiten Loch (29) bereitgestellt ist, durch das der Eingabeabschnitt (1) oberhalb des ersten Gleitabschnitts (10) verläuft, wobei sich das zweite Loch (29) in der ersten Richtung erstreckt;
**dadurch gekennzeichnet, dass**
eine erste Gleitfläche (5), über die der erste Gleitabschnitt (10) gleitet, wenn er von unten durch die obere Komponente (40), die durch den Vorspannabschnitt (9) nach oben vorgespannt ist, gegen die erste Gleitfläche (5) gedrückt wird, wobei die erste Gleitfläche (5) eine konvex nach oben gekrümmte Form aufweist; und
eine zweite Gleitfläche (6), über die der zweite Gleitabschnitt (20) gleitet, wenn er von unten durch die obere Komponente (40), die durch den Vorspannabschnitt (9) nach oben vorgespannt ist, gegen die zweite Gleitfläche (6) gedrückt wird, wobei die zweite Gleitfläche (6) eine konvex nach oben gekrümmte Form aufweist.

2. Richtungseingabevorrichtung (100) nach Anspruch 1, umfassend einen Führungsabschnitt (31), der das Gleiten des ersten Gleitabschnitts (10) von unten führt.

3. Richtungseingabevorrichtung (100) nach Anspruch 2, wobei
der Führungsabschnitt (31) eine Führungsfläche (31a) beinhaltet, über die der erste Gleitabschnitt (10) gleitet, und
ein Krümmungsmittelpunkt der Führungsfläche (31a) mit einem Krümmungsmittelpunkt der ersten Gleitfläche (5) übereinstimmt.

4. Richtungseingabevorrichtung (100) nach Anspruch 3 oder 3, wobei
der Führungsabschnitt (31) als Schalter fungiert, der durch den ersten Gleitabschnitt (10) nach unten gedrückt wird.

5. Richtungseingabevorrichtung (100) nach Anspruch 4, wobei
der Eingabeabschnitt (1) ferner ein Wellenelement (43) beinhaltet, und
das Wellenelement (43) so konstruiert ist, dass es den ersten Gleitabschnitt (10) nach unten drückt, ohne den zweiten Gleitabschnitt (20) nach unten zu drücken, wenn der Eingabeabschnitt (1) nach unten gedrückt wird.

6. Richtungseingabevorrichtung (100) nach einem der Ansprüche 1 bis 5, wobei
die Basis (80) oder die untere Komponente (50) eine Form aufweist, die die Rückstellkraft in Abhängigkeit von der Neigungsrichtung verändert.

7. Richtungseingabevorrichtung (100) nach einem der Ansprüche 1 bis 6, wobei
die Basis (80) eine obere gekrümmte Fläche (81a) beinhaltet, die der unteren Komponente (50) gegenüberliegt,
die zweite Gleitfläche (6) eine teilweise kugelförmige Form ist, die so ausgebildet ist, dass der Eingabeabschnitt (1) in Bezug auf ein virtuelles Zentrum geneigt ist, und
die obere gekrümmte Fläche (81a) eine geringere Krümmung als die zweite Gleitfläche (6) aufweist.

8. Richtungseingabevorrichtung (100) nach einem der Ansprüche 1 bis 6, wobei
die Basis (80) mit einem Loch bereitgestellt ist,
eine innere Umfangsseitenfläche des Lochs eine äußere Umfangsseitenfläche der unteren Komponente (50) umgibt, und
die innere Umfangsseitenfläche einen Innendurchmesser aufweist, der nach unten abnimmt.

9. Richtungseingabevorrichtung (100) nach einem der Ansprüche 1 bis 8, ferner umfassend ein Modulgehäuse (85), in dem der erste Gleitabschnitt (10) und der zweite Gleitabschnitt (20) angeordnet sind, wobei
sowohl die erste Gleitfläche (5) als auch die zweite Gleitfläche (6) auf einer Rückfläche des Modulgehäuses (85) ausgebildet ist.

10. Richtungseingabevorrichtung (100) nach einem der Ansprüche 1 bis 8, ferner umfassend ein Modulgehäuse (85), in dem der erste Gleitabschnitt (10) und der zweite Gleitabschnitt (20) angeordnet sind, wobei
die zweite Gleitfläche (6) auf einer Rückfläche des Modulgehäuses (85) ausgebildet ist und die erste Gleitfläche (5) auf einer unteren Fläche des zweiten Gleitabschnitts ausgebildet ist.

11. Steuerung (110), umfassend:
die Richtungseingabevorrichtung (100) nach einem der Ansprüche 1 bis 10; und
ein Steuerungsgehäuse (3), das mit der Richtungseingabevorrichtung (100) bereitgestellt ist, wobei
die zweite Gleitfläche (6) eine teilweise kugelförmige Form ist, die so ausgebildet ist, dass der Eingabeabschnitt (1) in Bezug auf ein virtuelles Zentrum geneigt ist, und
das virtuelle Zentrum sich an der Außenseite des Steuerungsgehäuses (3) befindet.

12. Steuerung (110), umfassend:
die Richtungseingabevorrichtung (100) nach einem der Ansprüche 1 bis 10; und
ein Steuerungsgehäuse (3), das mit der Richtungseingabevorrichtung (100) bereitgestellt ist, wobei
die zweite Gleitfläche (6) eine teilweise kugelförmige Form ist, die so ausgebildet ist, dass der Eingabeabschnitt (1) in Bezug auf ein virtuelles Zentrum geneigt ist, und
das virtuelle Zentrum sich an der Außenseite der Richtungseingabevorrichtung (100) und im Inneren des Steuerungsgehäuses (3) befindet.

13. Steuerung (110) nach Anspruch 11 oder 12, wobei
sowohl die erste Gleitfläche (5) als auch die zweite Gleitfläche (6) auf einer Rückfläche des Steuerungsgehäuses (3) ausgebildet ist.

14. Steuerung (110) nach Anspruch 11 oder 12, wobei
die zweite Gleitfläche (6) auf einer Rückfläche des Steuerungsgehäuses (3) ausgebildet ist und die erste Gleitfläche (5) auf einer unteren Fläche des zweiten Gleitabschnitts (20) ausgebildet ist.

## Revendications

1. Dispositif (100) d'entrée de direction, le dispositif comprenant :
une partie d'entrée inclinable (1), la partie d'entrée (1) comportant :
un élément supérieur (40) muni, au niveau de sa partie supérieure, d'une surface actionnée apte à être actionnée par un utilisateur, l'élément supérieur (40) étant actionné de façon à être incliné,
un élément inférieur (50) disposé au-dessous de l'élément supérieur (40), l'élément inférieur (50) étant incliné conjointement avec l'élément supérieur (40), et
une partie de sollicitation (9) disposée entre l'élément supérieur (40) et l'élément inférieur (50), la partie de sollicitation (9) servant à solliciter l'élément supérieur (40) et l'élément inférieur (50) dans une direction dans laquelle l'élément supérieur (40) et l'élément inférieur (50) sont éloignés l'un de l'autre dans un sens haut-bas ;
une base (80) contre laquelle la partie d'entrée (1) est pressée à partir du dessus, la base (80) étant façonnée de sorte qu'une force de sollicitation appliquée par la partie de sollicitation (9) à l'élément inférieur (50) agisse de façon à déplacer la partie d'entrée (1) de retour à une position initiale lorsque la partie d'entrée (1) est inclinée à partir de la position initiale ;
une première partie coulissante (10) destinée à coulisser dans une première direction lors de l'inclinaison de la partie d'entrée (1) à partir de la position initiale dans la première direction, la première partie coulissante (10) étant munie d'un premier trou (19) à travers lequel la partie d'entrée (1) peut passer, le premier trou (19) s'étendant dans une seconde direction perpendiculaire à la première direction ;
une seconde partie coulissante (20) destinée à coulisser dans la seconde direction lors de l'inclinaison de la partie d'entrée (1) à partir de la position initiale dans la seconde direction, la seconde partie coulissante (20) étant munie d'un second trou (29) à travers lequel la partie d'entrée (1) peut passer au-dessus de la première partie coulissante (10), le second trou (29) s'étendant dans la première direction ;
**caractérisé en ce qu'**il comprend
une première surface de coulissement (5) sur laquelle la première partie coulissante (10) peut coulisser en étant pressée contre la première surface de coulissement (5) à partir du dessous par l'élément supérieur (40) sollicité vers le haut par la partie de sollicitation (9), la première surface de coulissement (5) présentant une forme incurvée de façon convexe vers le haut ; et
une seconde surface de coulissement (6) sur laquelle la seconde partie coulissante (20) peut coulisser en étant pressée contre la seconde surface de coulissement (6) à partir du dessous par l'élément supérieur (40) sollicité vers le haut par la partie de sollicitation (9), la seconde surface de coulissement (6) présentant une forme incurvée de façon convexe vers le haut.

2. Le dispositif (100) d'entrée de direction selon la revendication 1, comprenant une partie de guidage (31) destinée à guider le coulissement de la première partie coulissante (10) à partir du dessous.

3. Le dispositif (100) d'entrée de direction selon la revendication 2, dans lequel
la partie de guidage (31) comporte une surface de guidage (31a) sur laquelle la première partie coulissante (10) peut coulisser, et
un centre de courbure de la surface de guidage (31a) coïncide avec un centre de courbure de la première surface de coulissement (5).

4. Le dispositif (100) d'entrée de direction selon les revendications 2 ou 3, dans lequel
la partie de guidage (31) sert de commutateur qui peut être pressé vers le bas par la première partie coulissante (10).

5. Le dispositif (100) d'entrée de direction selon la revendication 4, dans lequel
la partie d'entrée (1) comporte en outre un élément arbre (43), et
l'élément arbre (43) est construit de façon à presser vers le bas la première partie coulissante (10) sans presser vers le bas la seconde partie coulissante (20) lorsque la partie d'entrée (1) est pressée vers le bas.

6. Le dispositif (100) d'entrée de direction selon l'une quelconque des revendications 1 à 5, dans lequel
la base (80), ou l'élément inférieur (50), présente une forme qui fait varier la force de récupération en fonction d'une direction d'inclinaison.

7. Le dispositif (100) d'entrée de direction selon l'une quelconque des revendications 1 à 6, dans lequel
la base (80) comporte une surface incurvée supérieure (81a) opposée à l'élément inférieur (50),
la seconde surface de coulissement (6) présente une forme partiellement sphérique façonnée de sorte que la partie d'entrée (1) soit inclinée par rapport à un centre virtuel, et
la surface incurvée supérieure (81a) présente une courbure plus petite que la seconde surface de coulissement (6).

8. Le dispositif (100) d'entrée de direction selon l'une quelconque des revendications 1 à 6, dans lequel
la base (80) est munie d'un trou,
une surface latérale périphérique interne du trou entoure une surface latérale périphérique externe de l'élément inférieur (50), et
la surface latérale périphérique interne présente un diamètre interne qui diminue vers le bas.

9. Le dispositif (100) d'entrée de direction selon l'une quelconque des revendications 1 à 8, comprenant en outre un boîtier à module (85) dans lequel la première partie coulissante (10) et la seconde partie coulissante (20) sont agencées, et
dans lequel la première surface de coulissement (5) et la seconde surface de coulissement (6) sont formées chacune sur une surface arrière du boîtier à module (85).

10. Le dispositif (100) d'entrée de direction selon l'une quelconque des revendications 1 à 8, comprenant en outre un boîtier à module (85) dans lequel la première partie coulissante (10) et la seconde partie coulissante (20) sont agencées, et
dans lequel la seconde surface de coulissement (6) est formée sur une surface arrière du boîtier à module (85), et la première surface de coulissement (5) est formée sur une surface inférieure de la seconde partie coulissante (20).

11. Dispositif de commande (110) comprenant :
le dispositif (100) d'entrée de direction selon l'une quelconque des revendications 1 à 10 ; et
un boîtier (3) de dispositif de commande muni du dispositif (100) d'entrée de direction, dans lequel
la seconde surface de coulissement (6) présente une forme partiellement sphérique façonnée de sorte que la partie d'entrée (1) soit inclinée par rapport à un centre virtuel, et
le centre virtuel est situé à l'extérieur du boîtier (3) du dispositif de commande.

12. Dispositif de commande (110) comprenant :
le dispositif (100) d'entrée de direction selon l'une quelconque des revendications 1 à 10 ; et
un boîtier (3) de dispositif de commande muni du dispositif (100) d'entrée de direction, dans lequel
la seconde surface de coulissement (6) présente une forme partiellement sphérique façonnée de sorte que la partie d'entrée (1) soit inclinée par rapport à un centre virtuel, et
le centre virtuel est situé à l'extérieur du dispositif (100) d'entrée de direction et à l'intérieur du boîtier (3) du dispositif de commande.

13. Le dispositif de commande (110) selon les revendications 11 ou 12, dans lequel
la première surface de coulissement (5) et la seconde surface de coulissement (6) sont formées chacune sur une surface arrière du boîtier (3) du dispositif de commande.

14. Le dispositif de commande (110) selon les revendications 11 ou 12, dans lequel
la seconde surface de coulissement (6) est formée sur une surface arrière du boîtier (3) du dispositif de commande, et la première surface de coulissement (5) est formée sur une surface inférieure de la seconde partie coulissante (20).
